# FASCICULE DE BREVET EUROPEEN

(11) **EP 3 331 079 B1**
(45) Date de publication et mention de la délivrance du brevet: **03.07.2019**
(21) Numéro de dépôt: 17204154.3
(22) Date de dépôt: 28.11.2017
(51) Int. Cl.: H01M 8/04089, H01M 8/0438, H01M 8/04537, H01M 8/04746, H01M 8/04858

(54) **SYSTEME ELECTROCHIMIQUE DE PILE A COMBUSTIBLE COMPORTANT UN DISPOSITIF DE REGULATION DE PRESSION**
ELEKTROCHEMISCHES BRENNSTOFFZELLENSYSTEM MIT DRUCKREGELVORRICHTUNG
ELECTROCHEMICAL FUEL CELL SYSTEM HAVING A PRESSURE REGULATING DEVICE

(30) Priorité: 30.11.2016 FR 1661704
(43) Date de publication de la demande: 06.06.2018
(73) Titulaire: COMMISSARIAT À L'ÉNERGIE ATOMIQUE ET AUX ÉNERGIES ALTERNATIVES, 75015 Paris (FR)
(72) Inventeur: REYNAUD, Roland, 38700 LE SAPPEY EN CHARTREUSE (FR); BOUIX, Didier, 38240 MEYLAN (FR); DESMOULINS, Cyrille, 38100 GRENOBLE (FR); DEVEDEUX, Hugo, 38000 GRENOBLE (FR); POIROT-CROUVEZIER, Jean-Philippe, 38450 SAINT-GEORGES DE COMMIERS (FR)
(74) Mandataire: GIE Innovation Competence Group

(56) Documents cités:
- WO-A2-2005/119824
- US-A- 5 441 821
- US-A1- 2006 246 330
- US-A1- 2007 207 355

## Description

### DOMAINE TECHNIQUE

Le domaine de l'invention est celui des systèmes électrochimiques à pile à combustible comportant un dispositif de régulation de la pression d'un fluide d'alimentation en entrée de la pile à combustible.

### ÉTAT DE LA TECHNIQUE ANTÉRIEURE

Une pile à combustible comporte habituellement un empilement de cellules électrochimiques qui comprennent chacune une anode et une cathode séparées électriquement l'une de l'autre par un électrolyte, dans laquelle a lieu une réaction électrochimique entre deux réactifs qui sont introduits de manière continue. Dans le cas d'une pile à hydrogène, le combustible (l'hydrogène) est apporté au contact de l'anode, alors que le comburant (l'oxygène par exemple contenu dans de l'air) est amené au contact de la cathode. La réaction électrochimique est subdivisée en deux demi-réactions, l'une d'oxydation et l'autre de réduction, qui ont lieu respectivement à l'interface anode/électrolyte et à l'interface cathode/électrolyte. Pour avoir lieu, la réaction électrochimique requiert la présence d'un conducteur ionique entre les deux électrodes, à savoir l'électrolyte par exemple contenu dans une membrane polymère, et un conducteur électronique formé par le circuit électrique externe. L'empilement de cellules est ainsi le lieu de la réaction électrochimique : les réactifs y sont apportés, les produits et les espèces non réactives en sont évacués ainsi que la chaleur produite lors de la réaction.

En sortie de pile, dans un fonctionnement dit en mode ouvert, les sorties d'anode et de cathode communiquent avec un conduit d'évacuation des fluides. Ainsi, lorsqu'on alimente la pile en sur-stoechiométrie (rapport supérieur à 1 entre la quantité de réactif injecté et la quantité de réactif consommé), le gaz sortant présente un débit suffisant pour évacuer l'eau produite par la réaction, qui peut ensuite être collectée à l'aide d'un séparateur de phase. Pour éviter de perdre le réactif non consommé, une boucle de recirculation est habituellement prévue, qui permet de réinjecter le réactif non consommé en entrée de pile. Cependant, du fait de la recirculation fluidique, les espèces non réactives, tel que l'azote à l'anode dans le cas d'une alimentation en air à la cathode, voient leur concentration molaire augmenter progressivement, ce qui peut nécessite d'effectuer régulièrement une étape de purge de la pile à combustible.

Une régulation de la pression d'entrée d'au moins l'un des fluides d'alimentation, par exemple de l'hydrogène, peut être nécessaire pour éviter une dégradation prématurée des propriétés de la pile à combustible. En effet, à titre d'exemple, une variation de la puissance électrique fournie par la pile à combustible peut induire une augmentation ou une diminution de la pression d'hydrogène dans la pile à combustible, et donc former une différence de pression potentiellement importante de part et d'autre de la membrane électrolytique, ce qui peut conduire à une dégradation des propriétés de l'assemblage membrane électrodes.

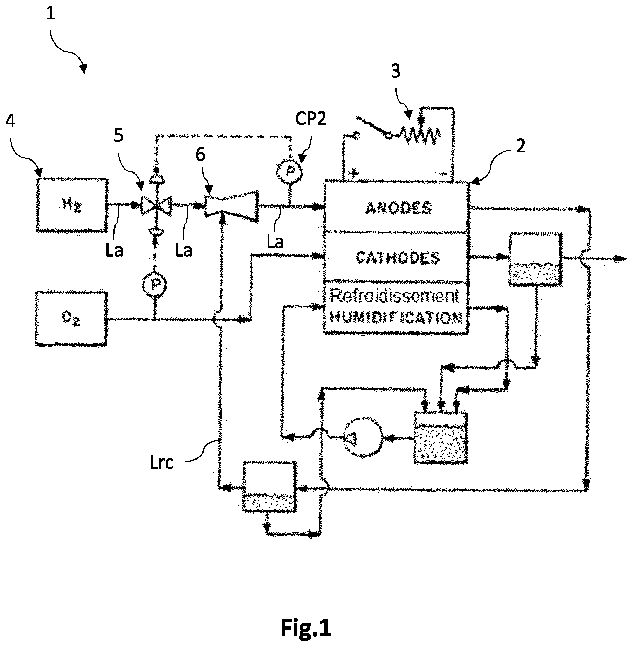

La figure 1 illustre un système électrochimique 1 à pile à combustible 2 tel que décrit dans le document US5441821, qui comporte un dispositif de régulation adapté à corriger la pression d'entrée P2 d'hydrogène lorsque celle-ci devient inférieure à une valeur minimale.

Le système électrochimique 1 comporte ainsi une pile à combustible 2 fluidiquement reliée à un réservoir 4 d'hydrogène sous pression. Le collecteur d'entrée anodique de la pile à combustible 2 permet l'introduction de l'hydrogène jusqu'aux anodes des cellules électrochimiques. La pile à combustible 2 est électriquement connectée à une charge électrique 3 qui est adaptée à imposer à la pile une valeur de puissance électrique instantanée à fournir.

Une ligne fluidique d'alimentation La relie le réservoir 4 au collecteur d'entrée anodique, et comporte un régulateur de pression 5 relié à la sortie du réservoir 4, qui maintient la pression du fluide d'alimentation en sortie du réservoir sensiblement égale à une valeur de consigne.

Le système électrochimique 1 comporte une boucle de recirculation, qui comporte un éjecteur 6 disposé sur la ligne d'alimentation La entre le régulateur de pression 5 et le collecteur d'entrée, et une ligne fluidique de recirculation Lrc qui relie le collecteur de sortie à une entrée secondaire de l'éjecteur 6. La boucle de recirculation permet de réinjecter dans le collecteur d'entrée le gaz issu du collecteur de sortie, c'est-à-dire l'hydrogène non consommé et éventuellement des gaz non réactifs.

Le dispositif de régulation de la pression d'entrée comporte un capteur de pression CP2, disposé sur la ligne fluidique d'alimentation La, qui permet de mesurer la pression d'entrée P2 du fluide d'alimentation à l'entrée de la pile à combustible. Le capteur de pression CP2 est adapté à envoyer un signal de commande au régulateur de pression 5 pour modifier la valeur de consigne en fonction de la valeur mesurée de la pression d'entrée P2.

En fonctionnement, la charge électrique 3 peut induire une augmentation de la puissance électrique fournie par la pile à combustible 2, ce qui se traduit par une augmentation du débit molaire d'hydrogène en entrée de pile, et donc par une diminution de la pression d'entrée P2. Lorsque la valeur mesurée P2 de la pression d'entrée atteint une valeur minimale déterminée, le capteur de pression CP2 envoie un signal de commande au régulateur de pression 5 pour que la valeur de consigne soit augmentée. L'augmentation de la pression en sortie du régulateur de pression 5 permet d'éviter que la pression d'entrée P2 ne devienne inférieure à la valeur minimale.

Il existe cependant un besoin de disposer d'un dispositif de régulation de la pression d'entrée de la pile à combustible qui soit davantage performant.

### EXPOSÉ DE L'INVENTION

L'invention a pour objectif de remédier au moins en partie aux inconvénients de l'art antérieur, et plus particulièrement de proposer un système électrochimique à pile à combustible comportant un dispositif performant de régulation de la pression d'entrée, notamment en termes de dynamique de régulation. Pour cela, l'objet de l'invention est un système électrochimique comportant :
- une pile à combustible, comportant un collecteur d'entrée et un collecteur de sortie adaptés à assurer l'écoulement d'un même fluide d'alimentation dans la pile à combustible ;
- une charge électrique, connectée électriquement à la pile à combustible, et adaptée à imposer à la pile à combustible une valeur de courant électrique à fournir ;
- un réservoir dudit fluide d'alimentation, relié au collecteur d'entrée par une ligne fluidique d'alimentation ;
- une boucle de recirculation, comportant un éjecteur, disposé sur ladite ligne fluidique d'alimentation, et une ligne fluidique de recirculation qui relie le collecteur de sortie à l'éjecteur ;
- un capteur de pression, adapté à mesurer une pression dite d'entrée du fluide d'alimentation à l'entrée de la pile à combustible ;
- un premier dispositif de régulation de la pression d'entrée.

Selon l'invention, le premier dispositif de régulation est adapté à envoyer un signal de commande à la charge électrique pour diminuer ou augmenter la valeur imposée du courant électrique à fournir par la pile à combustible, en fonction d'un écart de pression entre une valeur mesurée de la pression d'entrée issue du capteur de pression et une valeur de consigne prédéterminée.

De plus, le système électrochimique comporte un régulateur de pression, disposée sur la ligne fluidique d'alimentation, entre le réservoir et l'éjecteur, et adaptée à réguler la pression et le débit molaire du fluide d'alimentation suivant une valeur de consigne.

Le système électrochimique comporte en outre un deuxième dispositif de régulation, comportant un capteur de courant électrique électriquement connecté à la pile à combustible, un comparateur adapté à effectuer un calcul d'un écart de courant entre une valeur de courant électrique mesurée issue du capteur de courant électrique et une valeur de consigne prédéterminée, et un correcteur adapté à transmettre au régulateur de pression un signal de commande de modification de la valeur de consigne de la pression en fonction de l'écart de courant électrique calculé.

Le signal de commande transmis au régulateur de pression peut être adapté à provoquer l'augmentation de la valeur de consigne de pression lorsque la valeur mesurée du courant électrique est inférieure à la valeur de consigne du courant électrique, ou la diminution de la valeur de consigne de pression lorsque la valeur mesurée du courant électrique est supérieure à la valeur de consigne du courant électrique.

Le premier dispositif de régulation peut comporter un correcteur, connecté électriquement à la charge électrique, et adapté à recevoir une valeur représentative dudit écart de pression calculé et à envoyer ledit signal de commande à la charge électrique.

Le premier dispositif de régulation peut comporter un comparateur, connecté au capteur de pression et au correcteur, adapté à recevoir la valeur mesurée de la pression d'entrée issue du capteur de pression, à recevoir une valeur de consigne prédéterminée, à calculer ledit écart de pression entre la valeur mesurée et la valeur de consigne, et à envoyer au correcteur un signal représentatif de cet écart de pression.

La charge électrique peut être adaptée, en réponse au signal de commande, d'une part à diminuer la valeur imposée du courant électrique à délivrer lorsque la valeur de pression mesurée est inférieure à la valeur de consigne, et d'autre part à augmenter la valeur imposée du courant électrique à délivrer lorsque la valeur de pression mesurée est supérieure à la valeur de consigne.

La charge électrique peut comporter un moteur électrique, un système intermédiaire d'accumulation d'énergie connecté à la pile à combustible et au moteur électrique, et un convertisseur électrique connecté à la pile à combustible, au système d'accumulation d'énergie et au dispositif de régulation de la pression d'entrée, le convertisseur électrique étant apte à recevoir le signal de commande pour diminuer ou augmenter la valeur imposée à la pile à combustible du courant électrique à fournir.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique d'un système électrochimique selon un exemple de l'art antérieur ;
la figure 2 est une vue schématique d'un système électrochimique selon un premier mode de réalisation comportant un dispositif de régulation d'une pression d'entrée ;
la figure 3 est une vue schématique d'un système électrochimique selon un deuxième mode de réalisation comportant un premier dispositif de régulation d'une pression d'entrée et un deuxième dispositif de régulation du courant électrique délivré ;
la figure 4 illustre un exemple de la double régulation imbriquée de la pression d'entrée et du courant électrique délivré, et montre l'évolution temporelle de la valeur de courant électrique de consigne, celles de la pression de consigne du régulateur de pression et de la pression délivrée par ce dernier, la réponse de la pression d'entrée, ainsi que l'évolution temporelle du courant électrique de commande et du courant électrique délivré.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur un système électrochimique comportant une pile à combustible et un dispositif de régulation de pression adapté à réguler la pression d'un fluide d'alimentation en entrée de la pile à combustible afin qu'elle reste comprise entre une valeur seuil minimale et une valeur seuil maximale, et de préférence reste sensiblement constante à une valeur de consigne.

La pression d'entrée peut être mesurée au niveau du collecteur d'entrée de la pile à combustible, par exemple sur la ligne fluidique d'alimentation reliée au collecteur d'entrée à un point de mesure choisi de telle sorte que la pression d'entrée est sensiblement égale à la pression du fluide d'alimentation à l'intérieur de la pile à combustible. Par sensiblement égale, on entend ici que la perte de charge entre le point de mesure de la pression d'entrée et un point quelconque de mesure de la pression à l'intérieur de la pile à combustible est négligeable par rapport aux valeurs desdites pressions. En variante, la perte de charge peut ne pas être négligeable, mais celle-ci étant connue, la mesure de la pression d'entrée permet de déduire la valeur de la pression du fluide d'alimentation à l'intérieur de la pile à combustible.

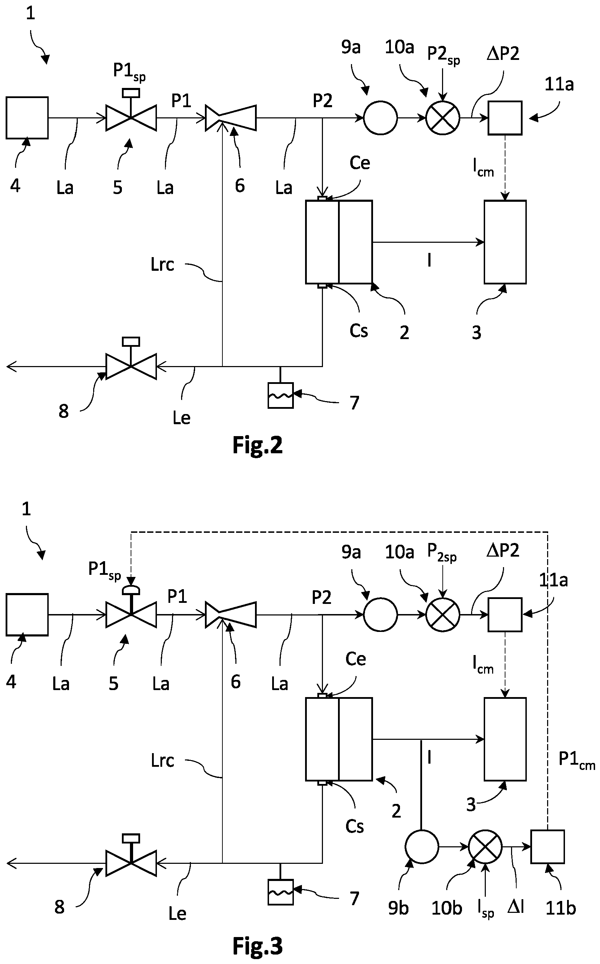

La figure 2 illustre de manière schématique un système électrochimique 1 selon un premier mode de réalisation. On considérera ici en particulier le côté anode d'une pile à hydrogène, celle-ci étant alimentée en hydrogène côté anode et en air contenant de l'oxygène côté cathode. Cependant, l'invention s'applique également au côté cathode alimenté en air. Par ailleurs, l'invention s'applique à tout type de pile à combustible 2, en particulier à celles fonctionnant à basse température, c'est-à-dire à une température inférieure à 250°C.

La pile à combustible 2 comporte au moins une cellule électrochimique, et ici un empilement de cellules électrochimiques (non représentées). Chaque cellule comporte une anode et une cathode séparées l'une de l'autre par une membrane électrolytique, cet ensemble formant un assemblage membrane électrodes (AME). L'anode, la membrane et la cathode sont des éléments classiques connus de l'homme du métier et ne sont donc pas décrites en détail.

Chaque assemblage est séparé de celui des cellules adjacentes par des plaques bipolaires, adaptées à amener les espèces réactives à l'anode d'une première cellule d'une part et à la cathode d'une cellule adjacente d'autre part, et à évacuer les produits issus des réactions électrochimiques et les espèces non réactives, ainsi qu'à transmettre le courant électrique entre les cellules. Elle peut également assurer l'écoulement d'un fluide caloporteur entre les cellules de manière à permettre l'évacuation de la chaleur produite.

La pile à combustible 2 comporte deux collecteurs d'entrée distincts, l'un anodique et l'autre cathodique, destinés à assurer l'injection des fluides d'alimentation jusqu'aux cellules, et deux collecteurs de sorties distincts correspondants, permettant d'évacuer les gaz d'alimentation n'ayant pas réagi et des éventuelles espèces non réactives hors de la pile à combustible 2. Ainsi, l'hydrogène est injecté dans la pile à combustible 2 par le collecteur d'entrée Ce anodique qui l'amène jusqu'aux cellules électrochimiques. L'hydrogène n'ayant pas réagi et les espèces non réactives, par exemple de l'azote, sont ensuite évacués par le collecteur de sortie.

Le système électrochimique 1 comporte également une charge électrique 3, connectée électriquement à la pile à combustible 2, adaptée à imposer à la pile à combustible 2 un signal de commande correspondant à la valeur du courant électrique à fournir. La pile à combustible 2 fonctionne alors en régime dit de courant imposé. A titre illustratif, la charge électrique 3 peut être un moteur électrique, une batterie électrique, un supercondensateur ou autre.

La pile à combustible 2 est alimentée en un fluide d'alimentation, ici en hydrogène, à partir d'une source d'hydrogène sous pression tel qu'un réservoir 4 d'hydrogène. Celui-ci est relié au collecteur d'entrée Ce anodique par une ligne fluidique d'alimentation La. L'hydrogène contenu dans le réservoir 4 est ainsi sous pression, par exemple à une pression supérieure à 10 bars.

Un régulateur de pression 5 est disposé sur la ligne fluidique d'alimentation La en aval du réservoir 4 d'hydrogène. Le régulateur de pression 5 est adapté à maintenir une pression aval P1 sensiblement constante, inférieure à la pression de l'hydrogène contenu dans le réservoir 4, et indépendante des éventuelles variations de pression dans le réservoir 4. La pression aval P1 correspond à la pression de l'hydrogène en sortie du régulateur de pression 5. La valeur de la pression aval P1 est sensiblement égale à la valeur de consigne P1ₛₚ du régulateur de pression 5, cette valeur pouvant être pilotée ou non. Le régulateur de pression 5 est ici une soupape de régulation de pression qui assure en outre le contrôle du débit molaire d'hydrogène sortant, dont la valeur dépend de celle de la pression aval P1.

Le système électrochimique 1 comporte une boucle de recirculation formée d'une part d'un éjecteur 6 disposé sur la ligne d'alimentation La, entre le régulateur de pression 5 et le collecteur d'entrée Ce anodique, et d'autre part d'une ligne fluidique de recirculation Lrc reliant fluidiquement le collecteur de sortie Cs anodique à une entrée dite secondaire de l'éjecteur 6.

L'éjecteur 6 comporte une entrée dite primaire reliée fluidiquement au régulateur de pression 5 par la ligne d'alimentation La, une entrée dite secondaire reliée fluidiquement au collecteur de sortie Cs par la ligne de recirculation Lrc et une sortie. Aussi, le fluide d'alimentation injecté à l'entrée primaire de l'éjecteur 6 forme un fluide dit moteur, et le fluide de recirculation injecté à l'entrée secondaire forme un fluide dit aspiré. Le fluide moteur, par son débit, provoque par effet Venturi l'écoulement du fluide situé dans la ligne fluidique de recirculation Lrc, qui se mélange avec le fluide moteur avant d'être réinjecté dans la ligne fluidique d'alimentation La. Le fluide aspiré étant issu du collecteur de sortie Cs, il peut être formé d'hydrogène n'ayant pas réagi et d'espèces gazeuses non réactives, comme éventuellement de l'azote ayant diffusé au travers de la membrane électrolytique.

La boucle de recirculation comporte de préférence un séparateur de phase 7, disposé sur la ligne de recirculation Lrc, entre le collecteur de sortie Cs et l'éjecteur 6, qui est adapté à collecter l'eau liquide éventuellement présente en sortie de la pile à combustible 2.

Le système électrochimique 1 comporte avantageusement ici une ligne fluidique d'évacuation Le, reliée fluidiquement au collecteur de sortie Cs par la ligne fluidique de recirculation Lrc, et disposée en aval du séparateur de phase 7. Une vanne de purge 8 est ici disposée sur la ligne d'évacuation Le pour permettre l'évacuation continue ou momentanée de gaz. A titre d'exemple, la vanne de purge 8 peut assurer une évacuation faible mais continue du gaz issu du collecteur de sortie Cs, permettant ainsi de limiter l'augmentation dans le temps de la concentration d'espèces non réactives dans la boucle de recirculation.

Le système électrochimique 1 comporte en outre un dispositif de régulation de la pression d'entrée, adapté à maintenir la pression d'entrée P2 sensiblement égale à une valeur de consigne P2ₛₚ déterminée. La valeur de consigne peut être une unique valeur, par exemple permettant d'obtenir de la pile à combustible le meilleur rendement électrochimique, ou correspondre à une valeur seuil minimale et une valeur seuil maximale. Dans cet exemple, la valeur de consigne correspond à une seule valeur définie.

Le dispositif de régulation comporte à cet effet un capteur de pression 9a, un comparateur 10a, et un correcteur 11a. Le capteur de pression 9a est disposé sur la ligne fluidique d'alimentation La entre l'éjecteur 6 et le collecteur d'entrée Ce anodique, et est adapté à mesurer la pression P2 de l'hydrogène à l'entrée de la pile à combustible 2. Il envoie au comparateur 10a un signal de mesure, de type électrique, pneumatique ou autre, représentatif de la valeur mesurée de la pression d'entrée P2.

Le comparateur 10a reçoit le signal de mesure et le compare à une valeur fixée dite valeur de consigne P2ₛₚ de la pression d'entrée. Il calcule ainsi un écart de pression ΔP2 correspondant à l'écart P2-P2ₛₚ et envoie au correcteur 11a un signal représentatif de l'écart de pression ΔP2 calculé.

Le correcteur 11a reçoit le signal d'écart de pression ΔP2 et calcule une nouvelle valeur du courant électrique à imposer à la pile à combustible 2 permettant de réduire voire annuler l'écart de pression ΔP2 préalablement calculé. Il transmet ensuite à la charge électrique 3 un signal de commande I_{cm} représentatif de la valeur calculée du courant électrique à imposer. Cette dernière est alors apte à imposer à la pile à combustible 2 la valeur de commande I_{cm} du courant électrique à fournir. Le correcteur 11a peut être du type PID (proportionnel-intégral-dérivé), ou autre. Le correcteur 11a peut également comporter un modèle physique du comportement électrochimique de la pile à combustible 2 et/ou du système électrochimique 1, qui indique notamment une relation entre la pression d'entrée P2 et le courant électrique fourni par la pile à combustible 2. Un paramétrage du correcteur 11a peut être effectué au moyen du modèle physique, d'une boucle d'apprentissage, ou de tout autre moyen équivalent.

Ainsi, le signal de commande I_{cm} est adapté à entraîner une modification de la valeur du courant électrique fourni par la pile à combustible 2, la nouvelle valeur du courant électrique permettant en retour de réduire voire annuler l'écart de pression ΔP2. Plus précisément, le signal de commande I_{cm} envoyé à la charge électrique 3 provoque, lorsque la pression d'entrée P2 est inférieure à la valeur de consigne P2ₛₚ, une diminution du courant électrique I fourni par la pile à combustible 2, ou, lorsque la pression d'entrée P2 est supérieure à la valeur de consigne P2ₛₚ, une augmentation du courant électrique I fourni.

Le fonctionnement du système électrochimique 1 est maintenant décrit. En régime nominal, la pression d'entrée anodique P2 de la pile à combustible 2 présente une valeur nominale, par exemple 1,4 bar. Elle est de préférence sensiblement égale à la valeur de la pression d'entrée cathodique, de sorte que l'assemblage membrane électrodes des cellules électrochimiques ne présente sensiblement pas de contraintes mécaniques liées à une différence de pression entre les côtés anode et cathode.

Sur la ligne fluidique d'alimentation La, la pression de l'hydrogène en sortie du réservoir 4 peut être de l'ordre de plusieurs dizaines de bars, puis est abaissée par le régulateur de pression 5 à une valeur P1 égale à la valeur de consigne P1ₛₚ, par exemple comprise entre 3 bars et 20 bars. La pression amont de l'éjecteur 6, ici sensiblement égale à P1, permet l'aspiration du fluide présent dans la boucle de recirculation. La pression aval de l'éjecteur 6 est inférieure à la pression amont, et est ici sensiblement égale à la pression d'entrée P2, soit à 1,4 bar. La ligne fluidique d'alimentation La est ici configurée de sorte que la perte de charge entre l'éjecteur 6 et le collecteur d'entrée Ce est négligeable. Aussi, la pression d'entrée P2 est sensiblement égale à la pression aval de l'éjecteur 6.

Sur la ligne fluidique de recirculation Lrc, la pression en sortie de la pile à combustible 2 est légèrement inférieure à la pression d'entrée P2, du fait de la faible perte de charge dans les circuits de distribution et les collecteurs de la pile à combustible 2 et du débit molaire consommé par la pile à combustible. Elle peut ainsi être sensiblement égale à 1,3 bar.

Cependant, la pression d'entrée anodique P2 est susceptible de varier et peut ainsi s'écarter de la valeur de consigne P2ₛₚ, ici égale à 1,4 bar. Or, on cherche habituellement à maintenir la pression d'entrée P2 sensiblement égale à la valeur de consigne, pour limiter ainsi les éventuels risques de dégradation des propriétés de l'assemblage membrane électrodes des cellules électrochimiques.

Une augmentation de la pression d'entrée P2 peut ainsi être mesurée par le capteur de pression 9a, et la valeur mesurée P2 est alors transmise au comparateur 10a qui calcule l'écart ΔP2 entre la valeur mesurée P2 et la valeur de consigne imposée P2ₛₚ. Il transmet ensuite un signal représentatif de l'écart de pression ΔP2 au correcteur 11a. Celui-ci calcule, sur la base du modèle électrochimique implanté de pile à combustible 2, une nouvelle valeur du courant électrique I_{cm} à fournir permettant de réduire voire annuler l'écart de pression ΔP2. Il transmet ensuite à la charge électrique 3 un signal de commande représentatif de la valeur du courant électrique I_{cm} à imposer. En réponse au signal de commande, la charge électrique 3 augmente la valeur du courant électrique imposé à la pile à combustible 2, de sorte que le courant électrique délivré I soit sensiblement égal à la valeur de commande I_{cm}. Cela se traduit par une augmentation du débit molaire d'hydrogène consommé par la pile à combustible 2, et donc par une diminution de la pression d'entrée P2, permettant ainsi de la maintenir sensiblement égale à la valeur de consigne P2ₛₚ.

De manière similaire, une diminution de la pression d'entrée P2 est mesurée par le capteur de pression 9a, qui transmet la valeur mesurée P2 au comparateur 10a qui calcule l'écart de pression ΔP2. Un signal d'écart de pression ΔP2 est alors transmis au correcteur 11a qui calcule une nouvelle valeur I_{cm} de courant électrique à imposer à la pile à combustible 2, sur la base du modèle électrochimique implanté et de l'écart de pression ΔP2 calculé. Il transmet ainsi à la charge électrique 3 le signal de commande I_{cm}, qui l'impose ensuite à la pile à combustible 2. En réponse au signal de commande, la charge électrique 3 diminue la valeur du courant électrique imposé à la pile à combustible 2, qui délivre alors un courant électrique dont la valeur I est sensiblement égale à la valeur de commande I_{cm}. Cela se traduit par une diminution du débit molaire d'hydrogène consommé par la pile à combustible 2, et donc par une augmentation de la pression d'entrée P2, permettant ainsi de la maintenir sensiblement égale à la valeur de consigne.

Le dispositif de régulation de pression effectue ainsi une régulation en boucle fermée dans la mesure où il mesure périodiquement ou continûment la pression d'entrée P2 et la compare à la valeur de consigne P2ₛₚ, et commande la pile à combustible 2 par l'intermédiaire de la charge électrique 3 pour limiter ou annuler l'écart de pression ΔP2. La réponse de la pile à combustible 2 à la commande du dispositif de régulation modifie ainsi la valeur mesurée P2 de la pression d'entrée.

Ainsi, la pression d'entrée P2, grâce au dispositif de régulation, reste sensiblement égale à la valeur de consigne P2ₛₚ grâce à la boucle fermée de régulation. Dans la mesure où le dispositif de régulation régule la pression d'entrée P2 par l'intermédiaire de la consommation électrique imposée à la pile à combustible 2 au moyen de la charge électrique 3, le dispositif de régulation présente des performances dynamiques améliorées notamment en termes de temps de réponse. En effet, à la différence du document US5441821 mentionné précédemment qui prévoit la modification de la valeur de consigne du régulateur de pression 5, le dispositif de régulation ne prévoit pas d'action mécanique, mais uniquement une action électrique, ce qui réduit le temps de réponse du système électrochimique 1 et améliore la dynamique de régulation. Ainsi, le dispositif de régulation permet de limiter les variations trop importantes de la pression d'entrée et contribue ainsi à préserver la pile à combustible de dégradations de ses propriétés électrochimiques. Par ailleurs, il présente l'avantage, pour assurer la régulation de la pression d'entrée P2, de présenter une simplicité d'intégration dans le système électrochimique, ainsi qu'une grande fiabilité et sans qu'il soit nécessaire d'avoir recours à des modèles physiques complexes du système électrochimique.

La figure 3 illustre un système électrochimique 1 selon un deuxième mode de réalisation.

Le système électrochimique 1 comporte les mêmes éléments que ceux illustrés sur la figure 2, et comporte en outre un deuxième dispositif de régulation adapté à assurer la régulation du courant électrique fourni par la pile à combustible 2. Ce dispositif de régulation forme une boucle de régulation imbriquée dans celle du premier dispositif de régulation, dans la mesure où, d'une part, la régulation de la pression d'entrée P2 autour de la valeur de consigne P2ₛₚ est effectuée par la commande I_{cm} du courant électrique I délivré par la pile à combustible 2, et que, d'autre part, la régulation du courant électrique délivré I par rapport à une valeur de consigne Iₛₚ est effectuée par l'intermédiaire du régulateur de la pression P1, qui impacte la pression d'entrée P2. Comme détaillé par la suite, il est alors possible de commander la valeur du courant électrique délivré I par la pile à combustible 2, tout en régulant à la fois la pression d'entrée P2 et le courant électrique délivré I.

Le dispositif de régulation du courant électrique comporte un capteur de courant électrique 9b, un comparateur 10b et un correcteur 11b. Le capteur de courant électrique 9b est connecté électriquement à la pile à combustible 2, et est adapté à mesurer le courant électrique délivré I par la pile à combustible 2. Il envoie au comparateur 10b un signal de mesure représentatif de la valeur mesurée du courant électrique délivré I.

Le comparateur 10b est connecté électriquement au capteur de courant électrique 9b et au correcteur 11b. Il est adapté à recevoir du capteur de courant électrique 9b la valeur mesurée I du courant électrique, et calcule un écart de courant électrique ΔI correspondant à l'écart I-Iₛₚ où Iₛₚ est une valeur de consigne préalablement fixée. Cette valeur de consigne Isp est susceptible de varier dans le temps.

Le correcteur 11b reçoit le signal d'écart de courant électrique ΔI et calcule une nouvelle valeur de consigne P1ₛₚ du régulateur de pression 5 permettant de réduire voire annuler l'écart de courant ΔI préalablement calculé. Il transmet ensuite au régulateur de pression 5 un signal de commande P1_{cm} représentatif de la valeur calculée P1ₛₚ de la pression de sortie du régulateur de pression 5. Ce dernier modifie alors la valeur de consigne P1ₛₚ pour qu'elle soit égale à la valeur de commande P1_{cm}. Le correcteur 11b peut être du type PID (proportionnel-intégral-dérivé), ou autre. Le correcteur 11b peut comporter un modèle physique du comportement électrochimique du système électrochimique 1, qui indique notamment une relation entre la pression P1 délivrée par le régulateur de pression 5 et le courant électrique délivré I par la pile à combustible 2.

Le signal de commande P1_{cm} est adapté à entraîner une augmentation ou une diminution de la valeur de consigne P1ₛₚ du régulateur de pression 5, ce qui entraîne une augmentation ou une diminution du débit molaire d'hydrogène dans la ligne fluidique d'alimentation La. Plus précisément, le signal de commande P1_{cm} transmis au régulateur de pression 5 provoque, lorsque le courant électrique délivré I est inférieur à la valeur de consigne Iₛₚ, une augmentation de la valeur de consigne P1ₛₚ et donc de la valeur du débit molaire d'hydrogène circulant dans la ligne fluidique d'alimentation La, ou, lorsque le courant électrique délivré I est supérieur à la valeur de consigne Iₛₚ, une diminution de la valeur de consigne P1ₛₚ, et donc de la valeur du débit molaire d'hydrogène.

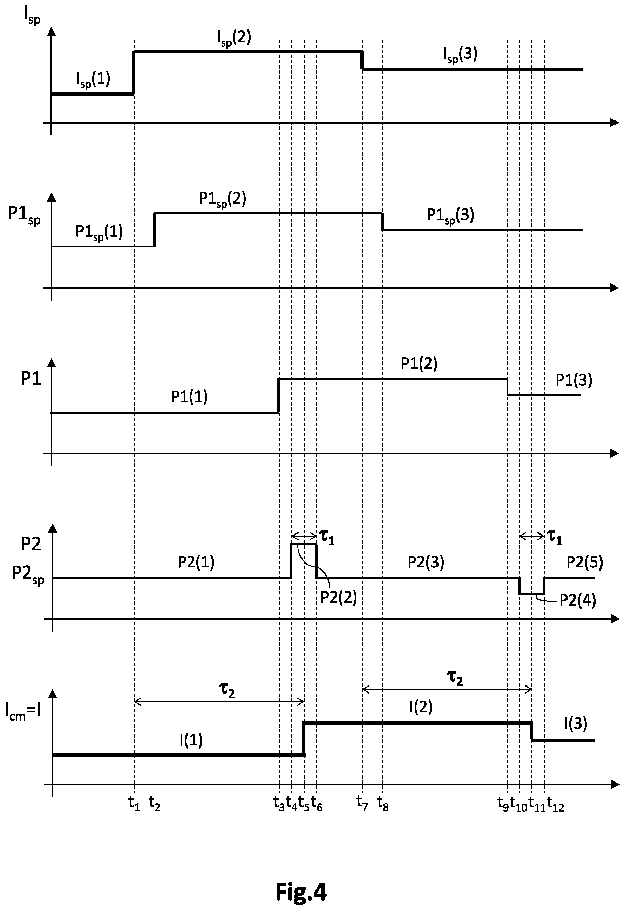

La figure 4 illustre un exemple de fonctionnement du système électrochimique 1 et de la régulation de la pression d'entrée P2 et du courant électrique I par boucles de régulation imbriquées, dans le cas de modifications de la valeur de consigne Iₛₚ du courant électrique à délivrer. Sont illustrées de manière schématique l'évolution temporelle du courant électrique de consigne Iₛₚ, celles de la pression de consigne P1ₛₚ et de la pression délivrée P1 par le régulateur de pression 5, la réponse de la pression d'entrée P2, ainsi que celle du courant électrique de commande I_{cm} qui est identique à celle du courant électrique délivré I par la pile à combustible 2.

En fonctionnement, la valeur de consigne Iₛₚ est initialement égale à Iₛₚ(1). Le courant électrique délivré I présente une valeur I(1) égale à la valeur de consigne Iₛₚ(1) et la pression d'entrée P2 présente une valeur P2(1) égale à la valeur de consigne P2ₛₚ.

A l'instant t₁, la valeur de consigne est augmentée de la valeur Iₛₚ(1) à la valeur Iₛₚ(2). Dans la mesure où le courant électrique délivré I reste inchangé, le deuxième dispositif de régulation calcule l'écart de courant ΔI=I(1)-Iₛₚ(1) et impose une valeur de commande P1_{cm} au régulateur de pression 5, qui augmente alors, à l'instant t₂, sa valeur initiale de consigne P1ₛₚ(1) à la valeur P1ₛₚ(2). La modification de la valeur de consigne du régulateur de pression 5 impliquant habituellement une action mécanique, la réponse de ce dernier n'est pas immédiate. Aussi, la pression délivrée P1 n'augmente de la valeur P1(1)=P1ₛₚ(1) à la valeur P1(2)=P1ₛₚ(2) qu'à l'instant t₃. L'hydrogène à plus haute pression va s'écouler dans la ligne fluidique d'alimentation La, de sorte que la pression d'entrée P2 augmente à l'instant t₄ de la valeur initiale P2(1) à la valeur P2(2).

Cette augmentation de la pression d'entrée P2 à l'instant t₄ est détectée par le premier dispositif de régulation, qui calcule l'écart de pression ΔP2=P2(2)-P2ₛₚ et impose à l'instant t₅ une valeur de commande I_{cm}(2) à la charge électrique 3 égale à la valeur de consigne Iₛₚ(2). La charge électrique 3 impose à la pile à combustible 2 cette valeur I_{cm}(2) du courant électrique, qui délivre alors immédiatement un courant électrique d'une valeur I(2)=I_{cm}(2)=Iₛₚ(2). La réponse de la charge électrique 3 et de la pile à combustible 2 à la commande imposée par le premier dispositif de régulation est quasiment immédiate dans la mesure où la réponse est purement électrique et non pas mécanique. L'augmentation du courant électrique délivré I correspond à une augmentation du débit molaire d'hydrogène consommé, ce qui provoque une diminution de la pression d'entrée P2 à l'instant t₆, qui repasse alors de la valeur P2(2) à la valeur P2(3) égale à la valeur de consigne P2ₛₚ.

Dans le cas d'une diminution de la valeur de consigne Iₛₚ du courant électrique, par exemple d'une diminution de la valeur Iₛₚ(2) à la valeur Iₛₚ(3) à l'instant t₇, le deuxième dispositif de régulation détecte l'écart de courant ΔI et envoie un signal de commande P1_{cm} au régulateur de pression 5 qui abaisse à l'instant t₈ la valeur de consigne P1ₛₚ(2) à la valeur P1ₛₚ(3). Cette diminution se traduit à l'instant t₉ par une baisse de la pression P1 délivrée par le régulateur de pression 5, ce qui entraîne à l'instant t₁₀ une baisse de la pression d'entrée P2 de la valeur P2(3) à la valeur P2(4) différente de la valeur de consigne P2ₛₚ.

Cet écart de pression ΔP2 est détecté et calculé par le premier dispositif de pression, ce qui entraîne l'application à la charge électrique 3 d'une commande I_{cm}(3) égale à la valeur de consigne Iₛₚ(3). En réponse, la charge électrique 3 impose à l'instant t₁₁ la valeur I_{cm}(3) à la pile à combustible 2 qui délivre alors aussitôt la valeur I(3)=I_{cm}(3)=Iₛₚ(3) de courant électrique délivré. La baisse de courant électrique délivré correspond à une diminution du débit d'hydrogène consommé, ce qui se traduit par une augmentation de la pression d'entrée P2 de la valeur P2ₛₚ(4) à la valeur P2(5) égale à la valeur de consigne P2ₛₚ.

Le système électrochimique 1 présente ainsi une double régulation imbriquée du courant électrique délivré I par la pile à combustible 2 autour de Iₛₚ d'une part et de la pression d'entrée P2 autour de P2ₛₚ d'autre part. Le système électrochimique 1 peut alors répondre aux variations de demande du courant électrique à fournir tout en présentant une sécurisation de la pile à combustible 2 contre les écarts de pression vis-à-vis de la pression de consigne P2ₛₚ. La double régulation présente un temps caractéristique τ₁ pour le premier dispositif de régulation et un temps caractéristique τ₂ pour le deuxième dispositif de régulation. La régulation de la pression d'entrée P2 étant purement électrique, le temps caractéristique τ₁ est bien inférieur au temps caractéristique τ₂. Ainsi, il est possible de piloter la puissance électrique tout en limitant les risques de dégradations prématurées des propriétés physiques de la pile à combustible.

Des modes de réalisation particuliers viennent d'être décrits. Différentes variantes et modifications apparaîtront à l'homme du métier.

Comme mentionné précédemment, les modes de réalisation ont été décrits en référence à la régulation de la pression d'entrée anodique de la pile à combustible mais l'invention peut s'appliquer à la régulation de la pression d'entrée cathodique. D'une manière générale, d'autres fluides d'alimentation que l'hydrogène et l'oxygène peuvent être considérés.

Par ailleurs, les lignes fluidiques d'alimentation, de recirculation et d'évacuation peuvent comporter d'autres organes fluidiques, tels que, par exemple, une soupape de sécurité disposée en amont de la pile à combustible ainsi que deux ou plus éjecteurs disposés en parallèle l'un de l'autre en bout de ligne fluidique de recirculation.

En outre, la charge 3 peut comporter un système intermédiaire d'accumulation d'énergie, tel qu'une batterie de puissance ou un supercondensateur, connecté entre la pile à combustible et un moteur électrique. Un convertisseur électrique, par exemple ici DC/DC, peut alors être connecté à la pile à combustible et au système d'accumulation, ainsi qu'au correcteur 11a. Le signal de commande I_{cm} est alors transmis par le correcteur 11a au convertisseur électrique, qui impose alors à la pile à combustible la valeur du courant électrique I à fournir. Un tel système d'accumulation d'énergie permet de répondre aux besoins instantanés du moteur électrique tout en préservant la pile à combustible de variations trop fortes en courant électrique.

## Revendications

1. Système électrochimique (1), comportant :
o une pile à combustible (2), comportant un collecteur d'entrée (Ce) et un collecteur de sortie (Cs) adaptés à assurer l'écoulement d'un même fluide d'alimentation dans la pile à combustible (2) ;
o une charge électrique (3), connectée électriquement à la pile à combustible (2), et adaptée à imposer à la pile à combustible (2) une valeur de courant électrique à fournir ;
o un réservoir (4) dudit fluide d'alimentation, relié au collecteur d'entrée (Ce) par une ligne fluidique d'alimentation (La) ;
o une boucle de recirculation, comportant un éjecteur (6), disposé sur ladite ligne fluidique d'alimentation (La), et une ligne fluidique de recirculation (Lrc) qui relie le collecteur de sortie (Cs) à l'éjecteur (6) ;
o un régulateur de pression (5), disposée sur la ligne fluidique d'alimentation (La), entre le réservoir (4) et l'éjecteur (6), et adaptée à réguler la pression (P1) et le débit molaire du fluide d'alimentation suivant une valeur de consigne (P1ₛₚ) ;
o un capteur de pression (9a), adapté à mesurer une pression dite d'entrée (P2) du fluide d'alimentation à l'entrée de la pile à combustible (2) ;
o un premier dispositif de régulation de la pression d'entrée (P2) ;
**caractérisé en ce que** le premier dispositif de régulation est adapté à envoyer un signal de commande (I_{cm}) à la charge électrique (3) pour diminuer ou augmenter la valeur imposée du courant électrique à fournir (I) par la pile à combustible (2), en fonction d'un écart de pression (ΔP2) entre une valeur mesurée de la pression d'entrée (P2) issue du capteur de pression (9a) et une valeur de consigne (P2ₛₚ) prédéterminée,
et **en ce qu'**il comporte :
o un deuxième dispositif de régulation, comportant un capteur (9b) de courant électrique électriquement connecté à la pile à combustible (2), un comparateur (10b) adapté à effectuer un calcul d'un écart de courant (ΔI) entre une valeur de courant électrique mesurée (I) issue du capteur (9b) de courant électrique et une valeur de consigne (Iₛₚ) prédéterminée, et un correcteur (11b) adapté à transmettre au régulateur de pression (5) un signal de commande (P1_{cm}) de modification de la valeur de consigne (P1ₛₚ) de la pression en fonction de l'écart de courant électrique (ΔI) calculé.

2. Système électrochimique (1) selon la revendication 1, dans lequel le premier dispositif de régulation comporte un correcteur (11a), connecté électriquement à la charge électrique (3), et adapté à recevoir une valeur représentative dudit écart de pression (ΔP2) calculé et à envoyer ledit signal de commande (I_{cm}) à la charge électrique (3).

3. Système électrochimique (1) selon la revendication 2, dans lequel le premier dispositif de régulation comporte un comparateur (10a), connecté au capteur de pression (9a) et au correcteur (11a), adapté à recevoir la valeur mesurée de la pression d'entrée (P2) issue du capteur de pression (9a), à recevoir une valeur de consigne (P2ₛₚ) prédéterminée, à calculer ledit écart de pression (ΔP2) entre la valeur mesurée (P2) et la valeur de consigne (P2ₛₚ), et à envoyer au correcteur (11a) un signal représentatif de cet écart de pression (ΔP2).

4. Système électrochimique (1) selon l'une quelconque des revendications 1 à 3, dans lequel la charge électrique (3) est adaptée, en réponse au signal de commande (I_{cm}), d'une part à diminuer la valeur imposée du courant électrique à délivrer lorsque la valeur de pression mesurée (P2) est inférieure à la valeur de consigne (P2ₛₚ), et d'autre part à augmenter la valeur imposée du courant électrique à délivrer lorsque la valeur de pression mesurée (P2) est supérieure à la valeur de consigne (P2sp).

5. Système électrochimique (1) selon l'une quelconque des revendications 1 à 4, dans lequel le signal de commande (P1_{cm}) transmis au régulateur de pression (5) est adapté à provoquer l'augmentation de la valeur de consigne (P1ₛₚ) de pression lorsque la valeur mesurée du courant électrique (I) est inférieure à la valeur de consigne (Iₛₚ) du courant électrique, ou la diminution de la valeur de consigne (P1ₛₚ) de pression lorsque la valeur mesurée du courant électrique (I) est supérieure à la valeur de consigne (Iₛₚ) du courant électrique.

6. Système électrochimique (1) selon l'une quelconque des revendications 1 à 5, dans lequel la charge électrique comporte un moteur électrique, un système intermédiaire d'accumulation d'énergie connecté à la pile à combustible et au moteur électrique, et un convertisseur électrique connecté à la pile à combustible, au système d'accumulation d'énergie et au dispositif de régulation de la pression d'entrée (P2), le convertisseur électrique étant apte à recevoir le signal de commande (I_{cm}) pour diminuer ou augmenter la valeur imposée à la pile à combustible (2) du courant électrique à fournir.

## Patentansprüche

1. Elektrochemisches System (1), das aufweist:
∘ eine Brennstoffzelle (2), die einen Eingangskollektor (Ce) und einen Ausgangskollektor (Cs) aufweist, die geeignet sind, das Fließen eines gleichen Versorgungsfluids in der Brennstoffzelle (2) zu gewährleisten;
∘ eine elektrische Last (3), die elektrisch mit der Brennstoffzelle (2) verbunden und geeignet ist, der Brennstoffzelle (2) einen Wert eines zu liefernden elektrischen Stroms vorzugeben;
∘ einen Speicherbehälter (4) des Versorgungsfluids, der durch eine Versorgungsfluidleitung (La) mit dem Eingangskollektor (Ce) verbunden ist;
∘ eine Rückführschleife, die einen Ejektor (6), der auf der Versorgungsfluidleitung (La) angeordnet ist, und eine Rückführfluidleitung (Lrc) aufweist, die den Ausgangskollektor (Cs) mit dem Ejektor (6) verbindet;
∘ einen Druckregler (5), der auf der Versorgungsfluidleitung (La) zwischen dem Speicherbehälter (4) und dem Ejektor (6) angeordnet und geeignet ist, den Druck (P1) und den Moldurchsatz des Versorgungsfluids gemäß einem Sollwert (P1ₛₚ) zu regeln;
∘ einen Drucksensor (9a), der geeignet ist, einen so genannten Eingangsdruck (P2) des Versorgungsfluids am Eingang der Brennstoffzelle (2) zu messen;
∘ eine erste Regelungsvorrichtung des Eingangsdrucks (P2);
**dadurch gekennzeichnet, dass** die erste Regelungsvorrichtung geeignet ist, ein Steuersignal (I_{cm}) an die elektrische Last (3) zu schicken, um den vorgegebenen Wert des von der Brennstoffzelle (2) zu liefernden elektrischen Stroms (I) abhängig von einer Druckabweichung (ΔP2) zwischen einem gemessenen Wert des Eingangsdrucks (P2), der vom Drucksensor (9a) stammt, und einem vorbestimmten Sollwert (P2ₛₚ) zu erhöhen oder zu verringern,
und dass es aufweist:
∘ eine zweite Regelungsvorrichtung, die einen elektrischen Stromsensor (9b), der elektrisch mit der Brennstoffzelle (2) verbunden ist, einen Komparator (10b), der geeignet ist, eine Berechnung einer Stromabweichung (ΔI) zwischen einem gemessenen elektrischen Stromwert (I), der vom elektrischen Stromsensor (9b) stammt, und einem vorbestimmten Sollwert (Iₛₚ) durchzuführen, und ein Korrekturglied (11b) aufweist, das geeignet ist, an den Druckregler (5) ein Steuersignal (P1_{cm}) zur Änderung des Sollwerts (P1ₛₚ) des Drucks abhängig von der berechneten elektrischen Stromabweichung (ΔI) zu übertragen.

2. Elektrochemisches System (1) nach Anspruch 1, wobei die erste Regelungsvorrichtung ein Korrekturglied (11a) aufweist, das elektrisch mit der elektrischen Last (3) verbunden und geeignet ist, einen für die berechnete Druckabweichung (ΔP2) repräsentativen Wert zu empfangen und das Steuersignal (I_{cm}) an die elektrische Last (3) zu schicken.

3. Elektrochemisches System (1) nach Anspruch 2, wobei die erste Regelungsvorrichtung einen mit dem Drucksensor (9a) und dem Korrekturglied (11a) verbundenen Komparator (10a) aufweist, der geeignet ist, den gemessenen Wert des Eingangsdrucks (P2) zu empfangen, der vom Drucksensor (9a) stammt, einen vorbestimmten Sollwert (P2ₛₚ) zu empfangen, die Druckabweichung (ΔP2) zwischen dem gemessenen Wert (P2) und dem Sollwert (P2ₛₚ) zu berechnen, und an das Korrekturglied (11a) ein für diese Druckabweichung (ΔP2) repräsentatives Signal zu schicken.

4. Elektrochemisches System (1) nach einem der Ansprüche 1 bis 3, wobei die elektrische Last (3) geeignet ist, als Reaktion auf das Steuersignal (I_{cm}) einerseits den vorgegebenen Wert des zu liefernden elektrischen Stroms zu verringern, wenn der gemessene Druckwert (P2) niedriger ist als der Sollwert (P2ₛₚ), und andererseits den vorgegebenen Wert des zu liefernden elektrischen Stroms zu erhöhen, wenn der gemessene Druckwert (P2) höher ist als der Sollwert (P2ₛₚ).

5. Elektrochemisches System (1) nach einem der Ansprüche 1 bis 4, wobei das an den Druckregler (5) übertragene Steuersignal (P1_{cm}) geeignet ist, die Erhöhung des Drucksollwerts (P1ₛₚ) zu bewirken, wenn der gemessene Wert des elektrischen Stroms (I) niedriger ist als der Sollwert (Iₛₚ) des elektrischen Stroms, oder die Verringerung des Drucksollwerts (P1ₛₚ) zu bewirken, wenn der gemessene Wert des elektrischen Stroms (I) höher ist als der Sollwert (Iₛₚ) des elektrischen Stroms.

6. Elektrochemisches System (1) nach einem der Ansprüche 1 bis 5, wobei die elektrische Last einen Elektromotor, ein Zwischensystem zur Energiespeicherung, das mit der Brennstoffzelle und dem Elektromotor verbunden ist, und einen elektrischen Wandler aufweist, der mit der Brennstoffzelle, mit dem Energiespeichersystem und mit der Regelungsvorrichtung des Eingangsdrucks (P2) verbunden ist, wobei der elektrische Wandler das Steuersignal (I_{cm}) empfangen kann, um den der Brennstoffzelle (2) vorgegebenen Wert des zu liefernden elektrischen Stroms zu verringern oder zu erhöhen.

## Claims

1. Electrochemical system (1) including:
∘ a fuel cell (2), including an inlet manifold (Ce) and an outlet manifold (Cs) that are capable of ensuring the flow of one and the same supply fluid through the fuel cell (2);
∘ an electrical load (3), electrically connected to the fuel cell (2), and capable of imposing an electric current value to be delivered on the fuel cell (2);
∘ a tank (4) for said supply fluid, connected to the inlet manifold (Ce) via a fluid supply line (La);
∘ a recirculation loop, including an ejector (6), which ejector is arranged on said fluid supply line (La), and a fluid recirculation line (Lrc) that connects the outlet manifold (Cs) to the ejector (6);
∘ a pressure regulator (5), arranged on the fluid supply line (La), between the tank (4) and the ejector (6), and capable of regulating the pressure (P1) and the molar flow rate of the supply fluid according to a setpoint value (P1ₛₚ);
∘ a pressure sensor (9a), capable of measuring what is termed an inlet pressure (P2) of the supply fluid at the inlet of the fuel cell (2);
∘ a first device for regulating the inlet pressure (P2);
**characterized in that** the first regulating device is capable of transmitting a control signal (I_{cm}) to the electrical load (3) in order to decrease or to increase the imposed value of the electric current to be delivered (I) by the fuel cell (2) according to a difference in pressure (ΔP2) between a measured value of the inlet pressure (P2) from the pressure sensor (9a) and a predetermined setpoint value (P2ₛₚ),
and **in that** it includes:
∘ a second regulating device, including an electric current sensor (9b) that is electrically connected to the fuel cell (2), a comparator (10b) that is capable of calculating a difference in current (ΔI) between a measured electric current value (I) from the electric current sensor (9b) and a predetermined setpoint value (Iₛₚ), and a corrector (11b) that is capable of transmitting, to the pressure regulator (5), a control signal (P1_{cm}) for modifying the setpoint value (P1ₛₚ) of the pressure according to the calculated difference in electric current (ΔI).

2. Electrochemical system (1) according to Claim 1, wherein the first regulating device includes a corrector (11a), electrically connected to the electrical load (3), and capable of receiving a value that is representative of said calculated difference in pressure (ΔP2) and of transmitting said control signal (I_{cm}) to the electrical load (3).

3. Electrochemical system (1) according to Claim 2, wherein the first regulating device includes a comparator (10a), connected to the pressure sensor (9a) and to the corrector (11a), capable of receiving the measured value of the inlet pressure (P2) from the pressure sensor (9a), of receiving a predetermined setpoint value (P2ₛₚ), of calculating said difference in pressure (ΔP2) between the measured value (P2) and the setpoint value (P2ₛₚ), and of transmitting, to the corrector (11a) a signal that is representative of said difference in pressure (ΔP2).

4. Electrochemical system (1) according to any one of Claims 1 to 3, wherein the electrical load (3) is capable, in response to the control signal (I_{cm}), both of decreasing the imposed value of the electric current to be delivered when the measured pressure value (P2) is lower than the setpoint value (P2ₛₚ) and of increasing the imposed value of the electric current to be delivered when the measured pressure value (P2) is higher than the setpoint value (P2ₛₚ).

5. Electrochemical system (1) according to any one of Claims 1 to 4, wherein the control signal (P1_{cm}) transmitted to the pressure regulator (5) is capable of causing the pressure setpoint value (P1ₛₚ) to increase when the measured value of the electric current (I) is lower than the setpoint value (Iₛₚ) of the electric current, or the pressure setpoint value (P1ₛₚ) to decrease when the measured value of the electric current (I) is higher than the setpoint value (Iₛₚ) of the electric current.

6. Electrochemical system (1) according to any one of Claims 1 to 5, wherein the electrical load includes an electric motor, an intermediate energy accumulation system that is connected to the fuel cell and to the electric motor, and an electrical converter that is connected to the fuel cell, to the energy accumulation system and to the device for regulating the inlet pressure (P2), the electrical converter being able to receive the control signal (I_{cm}) for decreasing or increasing the value of the electric current to be delivered that is imposed on the fuel cell (2).
